# EUROPEAN PATENT APPLICATION

(11) **EP 3 330 914 A1**
(43) Date of publication of application: **06.06.2018**
(21) Application number: 17204911.6
(22) Date of filing: 01.12.2017
(51) Int. Cl.: G06Q 20/20, G06Q 20/40

(54) **CHECKOUT SYSTEM, REGISTRATION DEVICE, SETTLEMENT DEVICE, AND CONTROL METHOD**

(30) Priority: 02.12.2016 JP 2016235316
(71) Applicant: Toshiba TEC Kabushiki Kaisha, Tokyo 141-8562 (JP)
(72) Inventor: GOTANDA, Tsuyoshi, Shinagawa-ku,, Tokyo 141-8562 (JP); NAKAJIMA, Takashi, Shinagawa-ku,, Tokyo 141-8562 (JP); SUGITA, Nobuhiro, Shinagawa-ku,, Tokyo 141-8562 (JP); MIYAZAKI, Jun, Shinagawa-ku,, Tokyo 141-8562 (JP); OTANI, Yuna, Shinagawa-ku,, Tokyo 141-8562 (JP); GOTOU, Chikashi, Shinagawa-ku,, Tokyo 141-8562 (JP); SUSAKI, Akiko, Shinagawa-ku,, Tokyo 141-8562 (JP)
(74) Representative: Takeuchi, Maya

(57) **Abstract**

A registration device receives an input of information relating to an attribute of a settler, and transmits information to a network by adding the input received information relating to the attribute of the settler to accounting data. A settlement device detects the information relating to the attribute of the settler which is added to the accounting data received via the network. Based on the detected information relating to the attribute of the settler, the settlement device changes a settlement image to an image suitable for the attribute of the settler, and causes a display device to display the changed image.

## Description

### FIELD

The present invention relates in general to a checkout system and the technologies used therein, and embodiments described herein relate in particular to a semi-self-checkout system, a registration device and a settlement device which are used for the system, and a control method for causing a computer to function as the settlement device.

### BACKGROUND

As a checkout system oriented for mass merchandisers, a semi-self-checkout system is known. Such a checkout system is divided into a registration device that generates accounting data required for transaction settlement in each transaction and a settlement device that performs transaction settlement processing, based on the accounting data. A configuration is adopted in which the registration device is operated by a clerk and the settlement device is operated by a customer.

The semi-self-checkout system is introduced, thereby enabling many stores to shorten an accounting waiting time of customers. However, some customers feel troublesome or feel difficulties in operating the settlement device by themselves. As a matter of fact, some customers prefer a face-to-face checkout system in which the clerk performs commodity registration as well as commodity settlement. Therefore, many stores adopt the face-to-face checkout system together with the semi-self-checkout system method.

From a viewpoint of cost aspects such as facility maintenance costs and personnel costs, a store side desires to further increase an operation rate of the semi-self-checkout system compared to the face-to-face checkout system. Therefore, it is conceivable to display images attracting customer's interest on a screen of a display device disposed in the settlement device, for example, so that many customers want to use the semi-self-checkout system. However, every customer is not interested in the same image. For example, the images attracting the customer's interest are different from each other depending on gender or an age difference.

To solve such problems, there is provided a checkout system comprising:
a registration device that generates accounting data required for transaction settlement;
a settlement device that performs settlement processing, based on the accounting data generated by the registration device; and
a network that connects the registration device and the settlement device to each other,
wherein the registration device comprises
   an input unit configured to receive an input of information relating to an attribute of a settler, and
   a transmission unit configured to transmit information to the network by adding the information received by the input unit and relating to the attribute of the settler to the accounting data, and
wherein the settlement device comprises
   a display device,
   a reception unit configured to receive the accounting data transmitted via the network,
   a detection unit configured to detect the information relating to the attribute of the settler which is added to the accounting data received by the reception unit,
   a selecting unit configured to select a settlement image having information relating to settlement processing to an image suitable for the attribute of the settler, based on the information relating to the attribute of the settler which is detected by the detection unit, and
   a control unit configured to display on the display device the settlement image selected by the selecting unit.

Preferably, under a condition that the input unit receives the input of the information relating to the attribute of the settler, the transmission unit transmits the accounting data, to which the information relating to the attribute of the settler is added, to the network.

In the above system, the accounting data preferably comprises at least one of a commodity code, a commodity name, a unit price, a number of sales, a sales amount, a total number, or a total amount of the commodities whose sales are registered.

In the above system also, the attribute of the settler is preferably at least one of gender, age, marital status, and a priority rank.

In the above system further, the attribute of the settler is preferably whether children are present.

Suitably, the image suitable for the attribute of the settler is a specific image corresponding to an age and gender of the settler.

Suitably still, the system comprises a plurality of registration devices and a plurality of settlement devices.

The invention also relates to a registration device connected via a network to a settlement device which performs settlement processing based on accounting data, the registration device comprising:
an input unit configured to receive an input of information relating to an attribute of a settler; and
a transmission unit configured to transmit information to the network by adding the information received by the input unit and relating to the attribute of the settler to the accounting data.

Preferably, when the input unit receives the input of the information relating to the attribute of the settler, the transmission unit transmits the accounting data, to which the information relating to the attribute of the settler is added, to the network.

Preferably still, the attribute of the settler is at least one of gender, age, marital status, and a priority rank.

Preferably yet, the attribute of the settler is whether children are present.

The invention further relates to a settlement device connected via a network to a registration device which generates accounting data required for transaction settlement, the settlement device comprising:
a display device;
a reception unit configured to receive the accounting data transmitted via the network;
a detection unit configured to detect information relating to an attribute of a settler which is added to the accounting data received by the reception unit;
a selecting unit configured to select a settlement image having information relating to settlement processing to an image suitable for the attribute of the settler, based on the information relating to the attribute of the settler which is detected by the detection unit; and
a control unit configured to display on the display device the settlement image selected by the selecting unit.

Suitably, the accounting data comprises at least one of a commodity code, a commodity name, a unit price, a number of sales, a sales amount, a total number, or a total amount of the commodities whose sales are registered.

Suitably still, the attribute of the settler is at least one of gender, age, marital status, and a priority rank.

Suitably yet, the attribute of the settler is whether children are present.

Suitably further, the image suitable for the attribute of the settler is a specific image corresponding to an age and gender of the settler.

The invention further concerns a control method for controlling a settlement device connected via a network to a registration device which generates accounting data required for transaction settlement, based on input data, and comprising a display device, the method comprising:
receiving the accounting data transmitted via the network;
detecting information relating to an attribute of a settler which is to be added to the accounting data received via the network;
selecting a settlement image having information relating to settlement processing to an image suitable for the attribute of the settler, based on the information relating to the attribute of the settler which is detected in the detecting; and
causing the display device to display the settlement image selected in the selecting.

Preferably, the method further comprises:
transmitting the accounting data, to which the information relating to the attribute of the settler is added, to the network when receiving accounting data comprising the attribute of the settler.

In the above method, the attribute of the settler is preferably at least one of gender, age, marital status, and a priority rank.

In the above method also, the image suitable for the attribute of the settler is preferably a specific image corresponding to an age and gender of the settler.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a schematic diagram of a checkout system according to the present embodiment.
FIG. 2 is a block diagram illustrating a main circuit configuration of a registration device and a settlement device which configure the checkout system.
FIG. 3 is a schematic diagram illustrating a main memory area formed in a RAM of the registration device.
FIG. 4 is a schematic diagram illustrating a main memory area formed in a RAM of the settlement device.
FIG. 5 is a flowchart illustrating a procedure of information processing performed by a CPU of the registration device.
FIG. 6 is a flowchart illustrating a procedure of information processing performed by the CPU of the registration device.
FIG. 7 is a flowchart illustrating a procedure of main processing performed by a CPU of the settlement device.
FIG. 8 is a flowchart illustrating a procedure of reception interruption processing performed by the CPU of the settlement device.
FIG. 9 illustrates an example of a detailed registration image displayed on a touch panel of the registration device.
FIG. 10 illustrates an example of a payment image displayed on the touch panel of the registration device.
FIG. 11 illustrates an example of a guide image displayed on the touch panel of the registration device.
FIG. 12 illustrates an example of a settlement image displayed on a touch panel of the settlement device.

### DETAILED DESCRIPTION

Embodiments described herein aim to provide a checkout system, and both a registration device and a settlement device which are used for the checkout system, in which an image attracting interest of a customer who is a settler can be displayed on a screen of a display device disposed in the settlement device.

According to an embodiment, there is provided a checkout system including a registration device that generates accounting data required for transaction settlement, a settlement device that performs settlement processing, based on the accounting data generated by the registration device, and a network that connects the registration device and the settlement device to each other. The registration device includes an input unit and a transmission unit. The settlement device includes a display device, a reception unit, a detection unit, a changing unit, and a control unit. The input unit receives an input of information relating to an attribute of a settler. The transmission unit transmits information to the network by adding the input information received by the input unit and relating to the attribute of the settler to the accounting data. The reception unit receives the accounting data transmitted via the network. The detection unit detects the information relating to the attribute of the settler which is added to the accounting data received by the reception unit. The changing or selecting unit changes (or selects if no image is shown) a settlement image having information relating to settlement processing to an image suitable for the attribute of the settler, based on the information relating to the attribute of the settler which is detected by the detection unit. The control unit causes the display device to display the settlement image changed by the changing unit.

Hereinafter, an embodiment of a checkout system will be described with reference to the drawings. In the embodiment, an image attracting interest of a customer who is a settler can be displayed on a screen of a display device disposed in a settlement device.

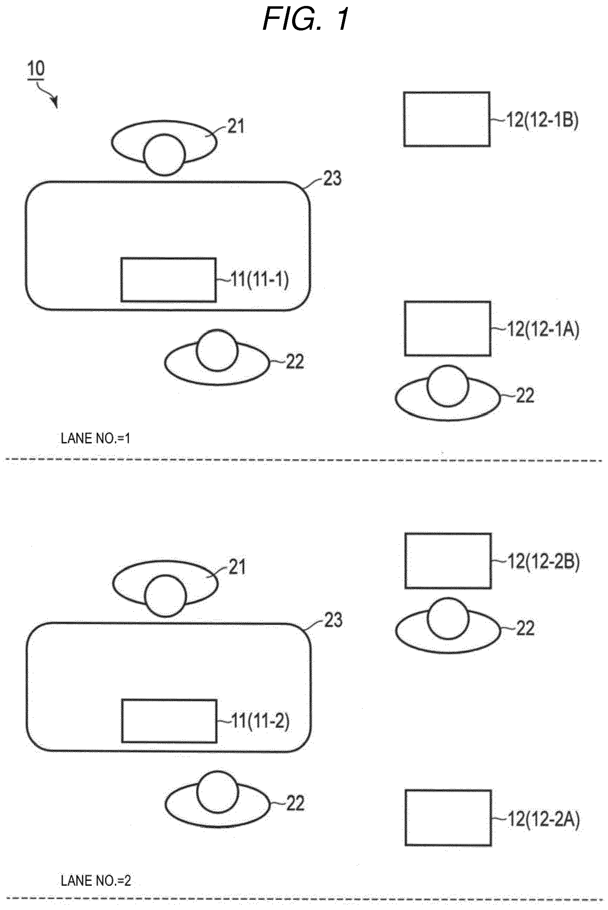

FIG. 1 is a schematic diagram of a checkout system 10 according to the present embodiment. The checkout system 10 includes a plurality of registration devices 11 and settlement devices 12. The number of settlement devices 12 is larger than the number of registration devices 11.

The registration device 11 is provided with each function such as sales registration of a commodity, generation of accounting data, and transmission of the accounting data. The sales registration of the commodity is to register sales data of the commodity in a memory, based on input data. For example, a bar code attached to the commodity is scanned and input, thereby causing the registration device 11 to register the sales data such as the number of sales and a sales amount of the commodity in the memory. If the sales of all commodities sold as a single transaction are completely registered, the registration device 11 generates the accounting data required for the transaction settlement, based on the sales data of each commodity registered in the memory. The accounting data includes a commodity code, a commodity name, a unit price, the number of sales, a sales amount, the total number, and the total amount of the commodities whose sales are registered. The registration device 11 transmits the accounting data to the settlement device 12.

The settlement device 12 is provided with a function of settlement processing. That is, the settlement device 12 receives a payment input, based on the accounting data received from the registration device 11, and settles a sales transaction of the commodity, based on the accounting data and payment data. For the payment, cash, a credit card, and electronic money are used.

The registration device 11 and the settlement device 12 are disposed for each checkout lane of a store. The number of checkout lanes is optionally determined. The number of registration devices 11 disposed in one checkout lane is one. The number of settlement devices 12 is optionally determined. FIG. 1 illustrates an example in which one registration device 11 and two settlement devices 12 are respectively disposed in two checkout lanes.

In FIG. 1, the registration device 11 is attached to a work table 23. The work table 23 has a rectangular top plate. A plurality of work tables 23 are disposed so that longitudinal directions of the top plates are substantially parallel to each other. A working space for a clerk 21 and a passage (checkout lane) for a shopper 22 are alternately formed.

Each unique number is allocated to each checkout lane. In FIG. 1, the lane number "1" is allocated to the checkout lane on an upper side in the drawing, and the lane number "2" is allocated to the checkout lane on a lower side in the drawing. One registration device 11 (11-1) and two settlement devices 12 (12-1A and 12-1B) are disposed in the checkout lane of the lane number "1". One registration device 11 (11-2) and two settlement devices 12 (12-2A and 12-2B) are disposed in the checkout lane of the lane number "2".

The registration device 11 cooperates with the two settlement devices 12 disposed in the same checkout lane. The accounting data is transmitted to one of the two settlement devices 12 cooperating therewith. It is optionally determined to transmit the accounting data to any one of the settlement devices 12. The accounting data may be transmitted to each of the two settlement devices 12.

The checkout system 10 employs a semi-self-checkout system. That is, in the registration device 11, the clerk 21 serves as an operator of the registration device 11. In the settlement device 12, the shopper (settler) 22 whose sales of the bought commodity is registered by the registration device 11 serves as an operator of the settlement device 12.

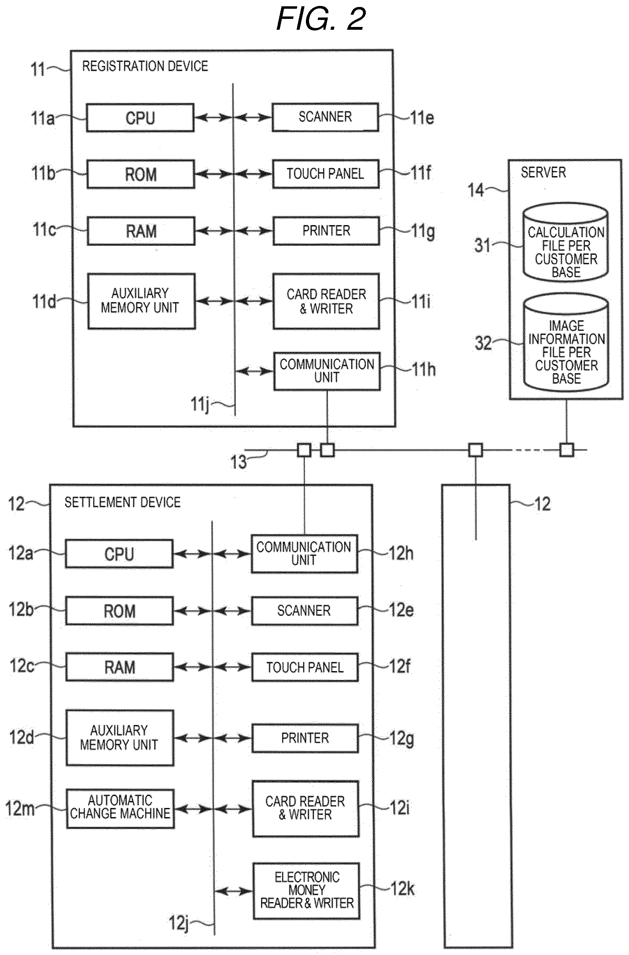

FIG. 2 is a block diagram illustrating a main circuit configuration of the registration device 11 and the settlement device 12. Both the registration device 11 and the settlement device 12 in each checkout lane are connected to a local area network (LAN) 13 serving as a network inside a store. A server 14 is also connected to the LAN 13.

The registration device 11 and the settlement device 12 exchange information via the LAN 13. As the network, another communication network such as the Internet and a wireless LAN may be used instead of the LAN 13. The information relating to the accounting data may be exchanged between the registration device 11 and the settlement device 12 via the server 14. The registration device 11 and the settlement device 12 may be connected to each other via the communication network for each checkout lane, and the registration devices 11 may be connected to each other via another communication network between one checkout lane and the other checkout lane.

The registration device 11 includes a CPU central processing unit (CPU) 11a, a read only memory (ROM) 11b, a random access memory (RAM) 11c, an auxiliary memory unit 11d, a scanner 11e, a touch panel 11f, a printer 11g, a reader & writer 11h, a communication unit 11i, and a transmission system 11j.

The CPU 11a is connected to the ROM 11b, the RAM 11c, and the auxiliary memory unit 11d via the transmission system 11j, thereby configuring a computer. The CPU 11a corresponds to a central portion of the above-described computer. Based on an operating system, middleware, and an application program which are stored in the ROM 11b and the RAM 11c, the CPU 11a controls each unit in order to realize various functions as the registration device 11.

The ROM 11b corresponds to a main memory portion of the above-described computer. The ROM 11b stores the above-described operating system. In some cases, the ROM 11b stores the middleware or the application program. In some cases, the ROM 11b stores reference data for the CPU 11a to perform various processes.

The RAM 11c corresponds to a main memory portion of the above-described computer. The RAM 11c stores reference data for the CPU 11a to perform various processes. The RAM 11c is also used as a so-called work area for storing data to be temporarily used by the CPU 11a in performing various processes.

The auxiliary memory unit 11d corresponds to an auxiliary memory of the above-described computer. The auxiliary memory unit 11d stores data used for the CPU 11a to perform various processes or data generated through the processing in the CPU 11a. For example, as the auxiliary memory unit 11d, an electric erasable programmable read-only memory (EEPROM), a hard disc drive (HDD), or a solid state drive (SSD) can be used. The application program stored in the ROM 11b or the auxiliary memory unit 11d includes a control program installed for controlling information processing to be performed by the registration device 11.

The scanner 11e reads a bar code attached to a commodity, and obtains a commodity code of the corresponding commodity.

The touch panel 11f includes a display device and a touch sensor. The touch panels 11f are respectively used for a clerk and a customer. The touch panel 11f for the clerk is disposed on the work table 23 so that a display screen faces the working space side of the clerk 21. The touch panel 11f for the customer is disposed on the work table 23 so that the display screen faces the passage side for the shopper 22.

The printer 11g issues a receipt by printing various character strings or images on receipt paper.

The card reader & writer 11i reads data recorded on the card, and writes data on the card. For example, a target of the card includes a membership card called a point card and a member's cards. In some cases, the target includes a payment card such as a credit card and a prepaid card.

The communication unit 11h is connected to the LAN 13. The communication unit 11h is connected to the settlement devices 12 via the LAN 13, and performs data communication with the plurality of settlement devices 12 in a cooperative state. The communication unit 11h can also perform data communication with the other registration device 11 via the LAN 13.

The transmission system 11j transmits data exchanged among the CPU 11a, the ROM 11b, the RAM 11c, the auxiliary memory unit 11d, the scanner 11e, the touch panel 11f, the printer 11g, the communication unit 11h, and the card reader & writer 11i. The transmission system 11j can employ a well-known system including various buses such as a system bus and various interface circuits for connecting these buses and each unit. For example, as hardware of the registration device 11, an existing POS terminal can be employed.

The settlement device 12 includes a CPU 12a, a ROM 12b, a RAM 12c, an auxiliary memory unit 12d, a scanner 12e, a touch panel 12f, a printer 12g, a communication unit 12h, a card reader & writer 12i, an electronic money reader & writer 12k, an automatic change machine 12m, and a transmission system 12j.

The card reader & writer 12i reads data recorded on the card, and writes data on the card. The target of the card includes the payment card such as the credit card and the prepaid card.

The electronic money reader & writer 12k reads and writes the electronic money exchanged between information recording media such as IC cards or information communication terminals such as smartphones or tablet terminals.

The automatic change machine 12m receives coins and bills to be put. The automatic change machine 12m discharges the coins and the bills as change.

The CPU 12a, the ROM 12b, the RAM 12c, the auxiliary memory unit 12d, the scanner 12e, the touch panel 12f, the printer 12g, the communication unit 12h, and the transmission system 12j have functions the same as those of the registration device 11. That is, the CPU 12a is connected to the ROM 12b, the RAM 12c, and the auxiliary memory unit 12d via the transmission system 12j, thereby configuring a computer. Based on the operating system, the middleware, and the application program which are stored in the ROM 12b and the RAM 12c, the CPU 12a controls each unit in order to realize various operations as the settlement device 12. The application program stored in the ROM 12b or the auxiliary memory unit 12d includes a control program installed for controlling the information processing performed in the settlement device 12. For example, as the hardware of the settlement device 12, it is possible to employ a POS terminal corresponding to an existing self-checkout system.

The server 14 stores commodity database in which commodity information such as a commodity name and a unit price is set in association with a commodity code of each commodity in the memory device. For example, the memory device is the HDD or the SSD. The memory device may be incorporated in the server 14, or may be externally attached to the server 14.

The server 14 stores a customer-segmented aggregation file 31 and a customer-segmented image information file 32 in the memory device.

The customer-segmented aggregation file 31 is an area for aggregating each purchased commodity data registered by each registration device 11 based on customer segment of the shopper 22 purchasing the commodity. For example, in the customer segment, the shoppers 22 are classified depending on gender and age which are attributes of the shoppers 22 so that the shopper 22 is classified into a teenage male, a male under 10, or a twenty to thirty-year-old female. The customer segment is optionally classified. For example, the customer segment can be classified for each store.

The customer-segmented image information file 32 is an area for storing information relating to a settlement image displayed on the touch panel 12f of the settlement device 12. The settlement image will be described later. The information relating to the settlement image is separately prepared for each customer segment, and is stored in the customer-segmented image information file 32.

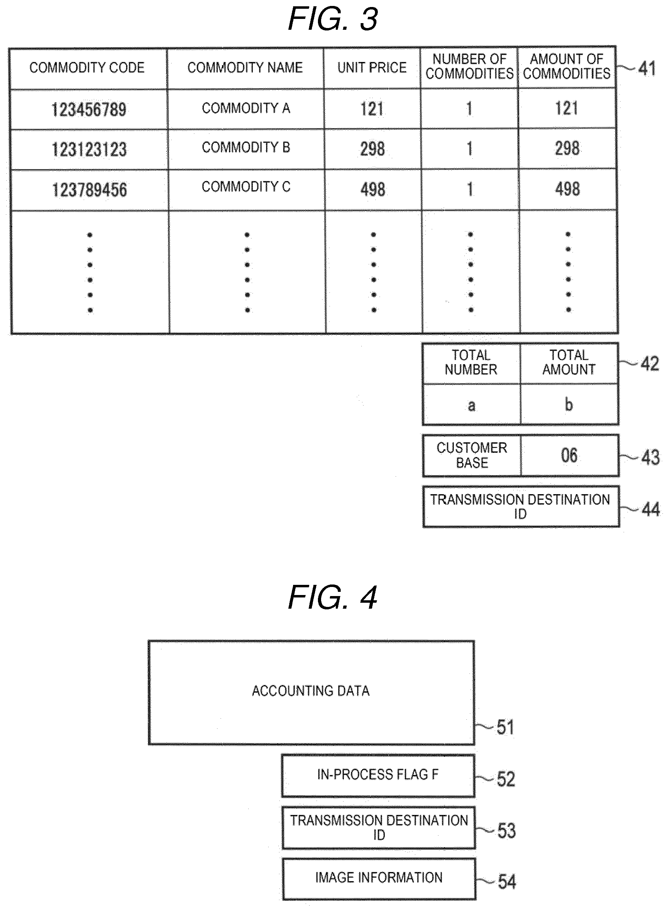

FIG. 3 is a schematic diagram illustrating a main memory area formed in the RAM 11c of the registration device 11. In FIG. 3, a memory area 41 is provided in order to store a plurality of records including each data of the commodity code, the commodity name, the unit price, and the number and the amount of the commodities. The commodity code is a unique code for individually identifying each commodity. Each commodity is marked with the commodity code represented by a barcode, for example. The commodity name and the unit price are the name and the price per one piece of the commodities identified by the commodity code having the same record. The number and the amount are the sales data of the commodities identified by the commodity code having the same record.

If the commodity code is acquired in the registration device 11, the CPU 11a makes an inquiry to the server 14 about the commodity information by using the commodity code. After receiving this inquiry, the server 14 gets access to the commodity database, reads the commodity information associated with the commodity code from the commodity database, and notifies the registration device 11 of the commodity information via the LAN 13. The CPU 11a of the registration device 11 prepares the above-described record, based on the commodity information notified from the server 14, and stores (registers) the record in the memory area 41. Hereinafter, the memory area 41 is referred to as a sales registration table 41.

A memory area 42 is provided in order to store the total number and the total amount. The total number is the sum of the number of the respective records stored (registered) in the sales registration table 41, and the total amount is the sum of the amounts having the same record. Hereinafter, the memory area 42 is referred to as a total sum table 42.

The memory area 43 is provided in order to store a customer segment code for identifying a customer segment of a shopper, a so-called settler 22, who performs settlement with the settlement device 12 to purchase a commodity identified by a record stored in the sales registration table 41. The customer segment code is a unique code assigned to each customer segment so as to identify each customer segment, respectively. Hereinafter, the memory area 43 is referred to as a customer segment memory 43.

A memory area 44 is provided in order to store a transmission destination ID for identifying the settlement device 12 serving as a transmission destination of the accounting data. The registration device 11 transmits the accounting data generated based on the information of the record stored in the sales registration table 41 to the settlement device 12 via the LAN 13. In this case, the registration device 11 transmits the accounting data via the LAN 13 to one settlement device 12 identified by the transmission destination ID stored in the memory area 44. Hereinafter, the memory area 44 is referred to as a transmission destination memory 44.

FIG. 4 is a schematic diagram illustrating a main memory area formed in the RAM 12c of the settlement device 12. In FIG. 4, a memory area 51 is disposed in order to store the accounting data received from the registration device 11. Hereinafter, the memory area 51 is referred to as an accounting data memory 51.

A memory area 52 is provided in order to store an in-process flag F. The in-process flag F is information for identifying whether or not the settlement processing based on the accounting data is performed. In the present embodiment, the in-process flag F is reset to "0" when the settlement processing is not performed, and is set to "1" when the settlement processing is performed. Hereinafter, the memory area 52 is referred to as a flag memory 52.

A memory area 53 is provided in order to store a transmission destination ID for identifying the other settlement device 12 serving as the transmission destination of the accounting data. If the settlement device 12 receives the other accounting data while the settlement processing is performed, the settlement device 12 transmits the accounting data via the LAN 13 to the other settlement device 12 identified by the transmission destination ID stored in the memory area 53. Hereinafter, the memory area 53 is referred to as a transmission destination memory 53.

The transmission destination ID is not stored in the transmission destination memory 53 in the settlement device 12 to which the accounting data is finally transmitted. Alternatively, information indicating that the transmission destination ID is not yet set is stored in the transmission destination memory 53.

A memory area 54 is provided in order to store image information corresponding to the customer segment of the settler. The image information is read from the customer-segmented image information file 32, and is stored in the memory area 54. Hereinafter, the memory area 54 is referred to as an image information memory 54.

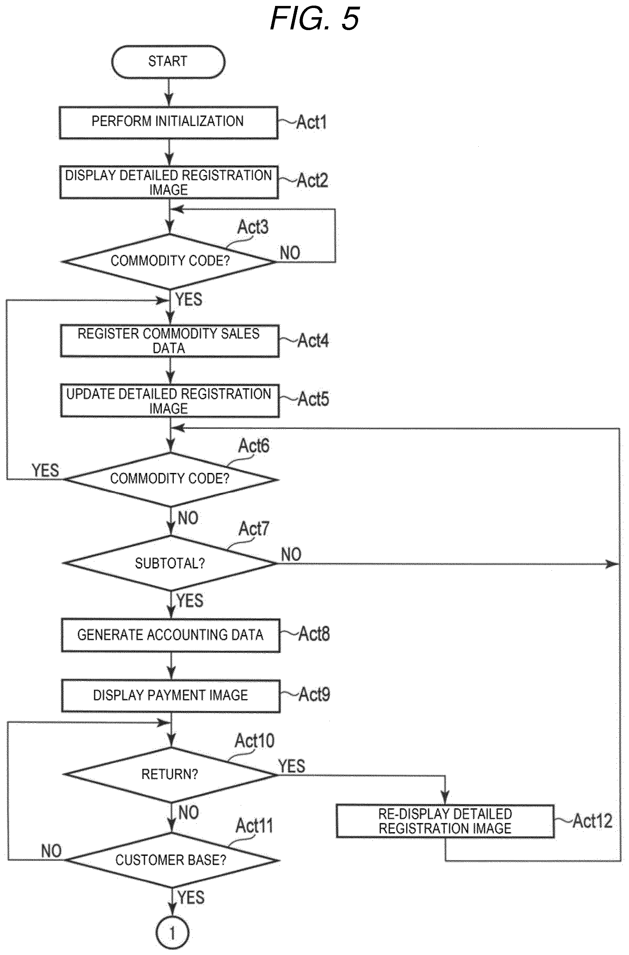

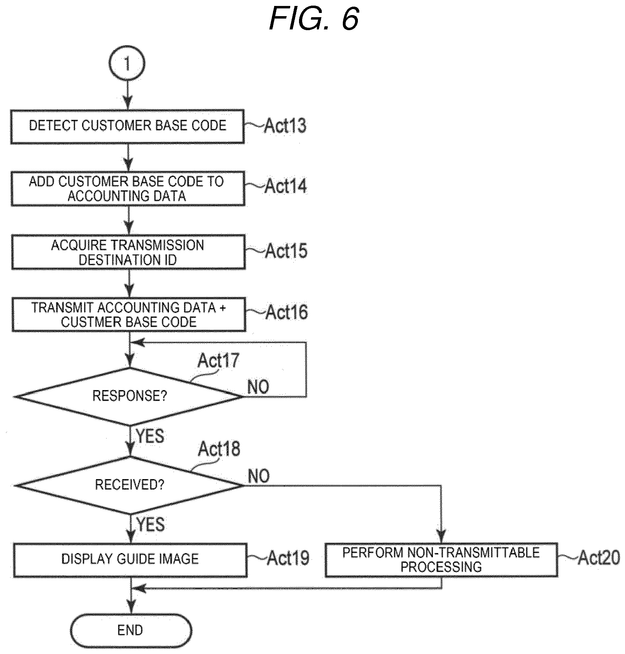

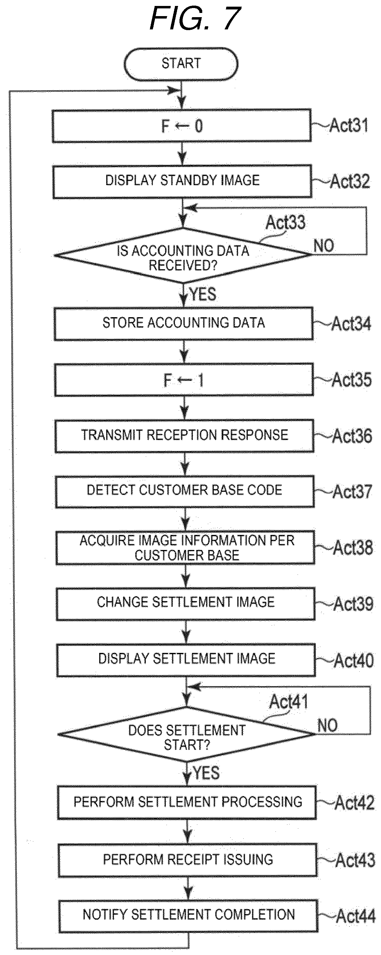

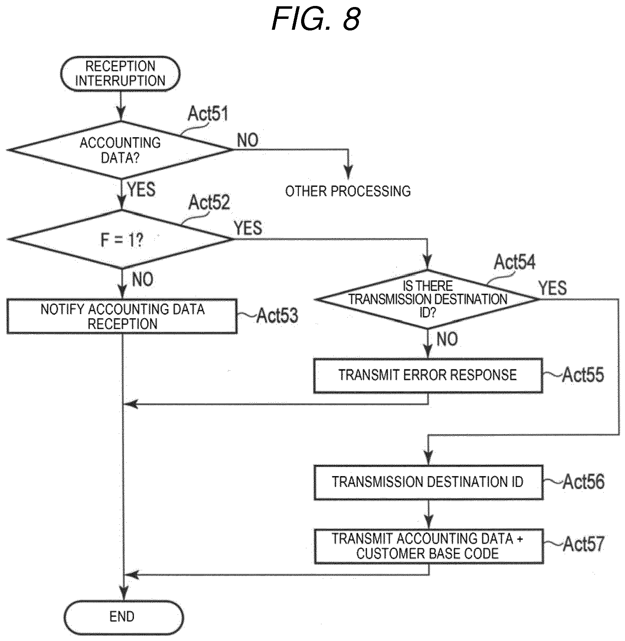

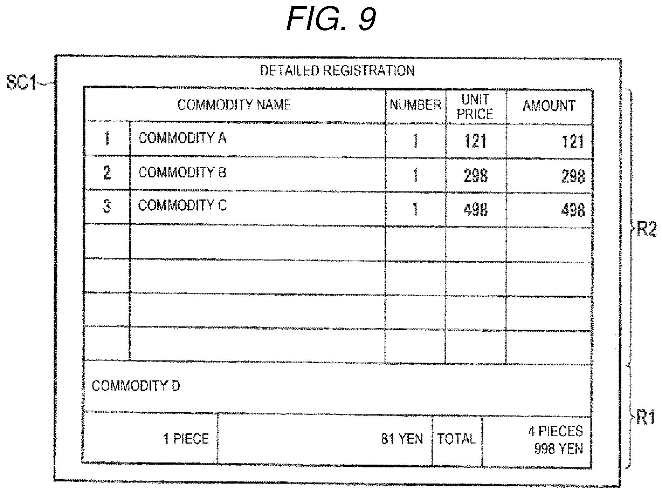

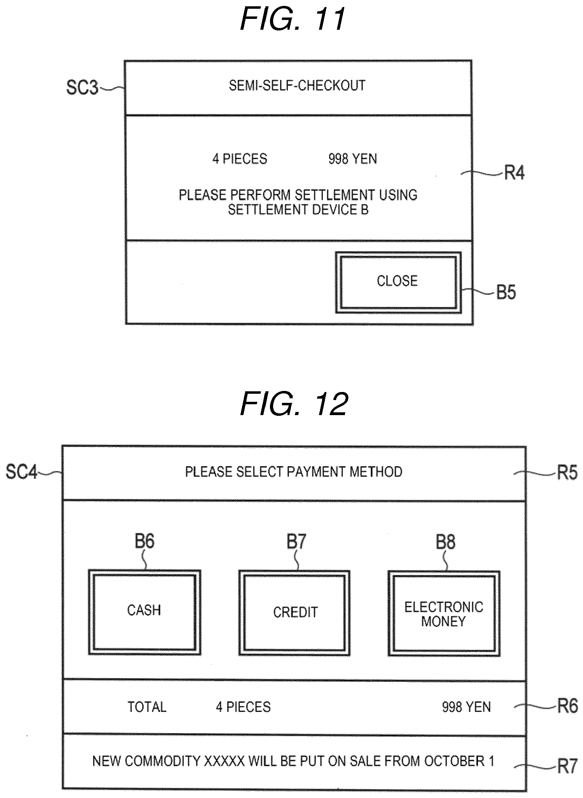

FIGS. 5 and 6 are flowcharts illustrating a procedure of information processing performed by the CPU 11a of the registration device 11. The information processing conforms to a control program stored in the ROM 11b or the auxiliary memory unit 11d. FIG. 7 is a flowchart illustrating a procedure of main processing performed by the CPU 12a of the settlement device 12, and FIG. 8 is a flowchart illustrating a procedure of reception interruption processing performed by the CPU 12a. The main processing and the reception interruption processing conform to the control program stored in the ROM 12b or the auxiliary memory unit 12d. FIGS. 9 to 11 are examples of images displayed on the touch panel 11f of the registration device 11, and FIG. 12 is an example of an image displayed on the touch panel 12f of the settlement device 12. Hereinafter, an operation of the checkout system 10 will be described with reference to the drawings. The processing contents and images described below are merely examples, and various processes and images which can obtain similar results can be appropriately used.

First, an operation of the registration device 11 will be described.

If the registration device 11 is activated in a mode for performing a registering process of a purchased commodity, the CPU 11a starts the information processing of the procedure illustrated by the flowchart in FIG. 5. First, the CPU 11a performs initialization as Act 1. Through this initialization, the sales registration table 41, the total sum table 42, and the customer segment memory 43 are cleared.

Next, as Act 2, the CPU 11a displays a detailed registration image SC1 (refer to FIG. 9) on a portion of a screen of the touch panel 11f.

The detailed registration image SC1 shows the contents of the sales registration table 41 and the total sum table 42, and causes the clerk 21 to confirm a state where the registration process is performed. FIG. 9 illustrates an example of the detailed registration image SC1. The detailed registration image SC1 includes display areas R1 and R2. The display area R1 displays the commodity name, number, and unit price relating to the commodity whose purchase is registered most recently, and the total number and total amount of the purchased commodities after the commodities are registered. The display area R2 displays the commodity name, number, unit price, and amount list relating to the commodity whose purchase is registered earlier than the commodity displayed on the detailed registration image SC1.

Although the illustration is omitted, in addition to the area serving as the detailed registration image SC1 on the screen of the touch panel 11f, the CPU 11a displays various function buttons such as a commodity button for the clerk 21 to designate the commodity and a subtotal button.

The clerk 21 who confirms the detailed registration image SC1 sequentially inputs commodity codes of the commodities purchased by the shopper 22, for example, by operating the scanner 11e or the commodity button. If the commodity codes of all purchased commodities are completely input, the clerk 21 touches the subtotal button.

Referring back to FIG. 5, description will be continued.

As Act 3, the CPU 11a displaying the detailed registration image SC1 awaits the input of the commodity codes. If the commodity codes are input via the scanner 11e or the commodity button (YES in Act 3), the CPU 11a registers commodity sales data as Act 4. That is, the CPU 11a detects commodity information such as the commodity name and the unit price which are set in a commodity database in association with the input commodity codes, and multiplies the unit price by the number of sales, thereby calculating the sales amount. The CPU 11a prepares a record of the commodity sales data including the commodity code, the commodity name, the unit price, the number of sales, and the sales amount, and registers the record in the sales registration table 41. The CPU 11a adds the number of sales and the sales amount to the total sum table 42. If the commodity sales data is completely registered in this way, as Act 5, the CPU 11a updates the detailed registration image SC1 so as to conform to the contents of the sales registration table 41 and the total sum table 42.

If the detailed registration image SC1 is updated, the CPU 11a confirms whether or not the commodity code is input as Act 6. When the commodity code is not input (NO in Act 6), the CPU 11a confirms whether or not the subtotal button is touched as Act 7. When the subtotal button is not touched (NO in Act 7), the CPU 11a returns to the process in Act 6. Therefore, the CPU 11a waits until the commodity code is input or the subtotal button is touched through the processes in Act 6 and Act 7. In the standby state, the CPU 11a may confirm the occurrence of other events such as whether other operations are performed, and may proceed to a process corresponding to the occurrence of other events.

In the standby state in Act 6 and Act 7, if the commodity code is input (YES in Act 6), the CPU 11a returns to the process in Act 4. The CPU 11a repeats the subsequent processes in the same manner as described above. Therefore, each time the commodity code is input, the CPU 11a registers the commodity sales data and updates the detailed registration image SC1.

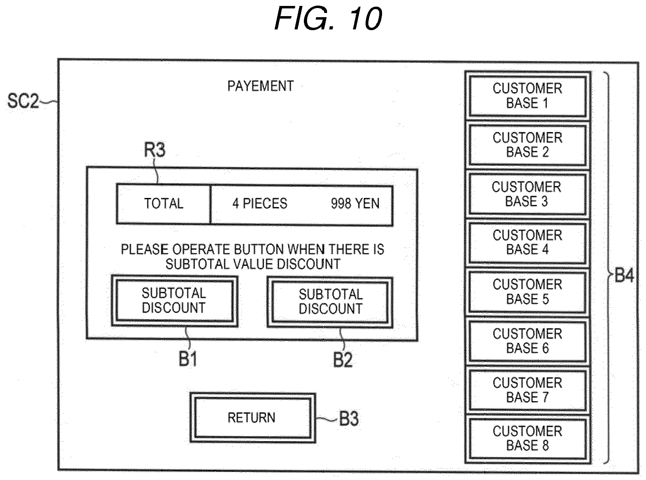

In the standby state in Act 6 and Act 7, if the subtotal button is touched (YES in Act 7), as Act 8, the CPU 11a generates the accounting data, based on the data of the sales registration table 41 and the total sum table 42. As Act 9, the CPU 11a displays a payment image SC2 (refer to FIG. 10) on a portion of the screen of the touch panel 11f.

FIG. 10 illustrates an example of the payment image SC2. The payment image SC2 includes a display area R3, and buttons B1, B2, B3, and B4. The display area R3 displays the total number and the total amount of the total sum table 42. The buttons B1 and B2 are provided for the clerk 21 to designate that a discount or price cutting is available from the total amount. The button B3 is provided for the clerk 21 to designate that the screen of the touch panel 11f displays the detailed registration image SC1 again. The button B4 is provided for the clerk 21 to designate the customer segment of the shopper 22. The buttons B4 exist as many as the classification number of customer segments. Customer segment codes of the respectively different customer segments are assigned to every one of the respective buttons B4. In the following description, the button B3 is referred to as a return button B3, and the button B4 is referred to as a customer segment button B4.

When the shopper 22 additionally purchases the commodity, the clerk 21 who confirms the payment image SC2 touches the return button B3. When there is no purchased commodity, the clerk 21 estimates the gender and age of the shopper 22. The clerk 21 touches a customer segment button B4 having the assigned customer segment code of the customer segment corresponding to the estimated gender and age.

Referring back to FIG. 5, description will be continued.

If the payment image SC2 is displayed, the CPU 11a confirms whether or not the return button B3 is touched as Act 10. When the return button B3 is not touched (NO in Act 10), the CPU 11a confirms whether or not the customer segment button B4 is touched as Act 11. When the customer segment button B4 is not touched (NO in Act 11), the CPU 11a returns to the process in Act 10. Therefore, the CPU 11a waits until the return button B3 is touched or the customer segment button B4 is touched through the processes in Act 10 and Act 11. In a standby state, the CPU 11a may confirm the occurrence of other events such as whether other operations are performed, and may proceed to a process corresponding to the occurrence of other events. For example, if any one of the buttons B1 and B2 is touched by the clerk 21, the CPU 11a changes the total amount included in the accounting data in accordance with a subsequent instruction by the clerk 21.

In the standby state in Act 10 and Act 11, if the return button B3 is touched (YES in Act 10), as Act 12, the CPU 11a re-displays the detailed registration image SC1 displayed immediately before, on a partial area of the screen of the touch panel 11f. Thereafter, the CPU 11a proceeds to the process in Act 6, and repeats the subsequent processes in the same manner as described above.

In the standby state in Act 10 and Act 11, if the customer segment button B4 is touched (YES in Act 11), as Act 13 (refer to FIG. 6), the CPU 11a detects the customer segment code assigned to the touched customer segment button B4. For example, in association with identification codes for respectively identifying a plurality of customer segment buttons B4, the auxiliary memory unit 11d of the registration device 11 stores a data table in which the customer segment codes assigned to the customer segment buttons B4 are set. The CPU 11a refers to the data table, and detects the customer segment codes assigned to the touched customer segment buttons B4.

Here, a computer mainly configured to include the CPU 11a performs the processes in Act 9, Act 11, and Act 13 in cooperation with the touch panel 11f, thereby configuring an input unit that receives an input of information (customer segment code) relating to the attribute of the settler (shopper 22).

If the customer segment code is detected in this manner, the CPU 11a stores the customer segment code in the customer segment memory 43. As Act 14, the CPU 11a adds the customer segment code stored in the customer segment memory 43 to the accounting data generated in the process of Act 8. The CPU 11a acquires the transmission destination ID from the transmission destination memory 44 as Act 15. The CPU 11a transmits the accounting data to which the customer segment code is added through the process in Act 14, to one settlement device 12 identified by the transmission destination ID as Act 16.

Specifically, the CPU 11a sets the communication address set in one settlement device 12 identified by the transmission destination ID as a transmission destination address, and sets the communication address set in the host device as a transmission source address, thereby controlling the communication unit 11h so as to transmit the accounting data having the assigned customer segment code to the LAN 13. Through this control, information including the accounting data having the assigned customer segment code is transmitted onto the LAN 13. This information is received by one settlement device 12 identified by the transmission destination ID.

Here, a computer mainly configured to include the CPU 11a performs the processes in Act 14 to Act 16 in cooperation with the communication unit 11h, thereby configuring a transmission unit that transmits information to the network (LAN 13) by adding the information (customer segment code) relating to the attribute of the settler (shopper 22) input by the input unit to the accounting data.

If the transmission of the accounting data is controlled in this way, the CPU 11a waits for a response signal from the settlement device 12 as Act 17. As will be described later, the settlement device 12 which receives the accounting data does not return the response signal to the registration device 11 in some cases, or returns a reception response signal or an error response signal in some cases. If the response signal is received via the communication unit 11h (YES in Act 17), as Act 18, the CPU 11a determines whether the response signal is the reception response signal or the error response signal.

When the error response signal is received (NO in Act 18), the CPU 11a performs a non-transmittable processing as Act 20. For example, the non-transmittable processing is performed in order to notify the clerk 21 that the accounting data transmitted in the process of Act 16 is not a processing target in the settlement device 12. When the accounting data is not the processing target in the settlement device 12, as an example, the clerk 21 may operate the registration device 11 so that the settlement processing of the accounting data is performed. If the non-transmittable processing is completely performed, the CPU 11a completes the information processing for one transaction.

When the response signal is the reception response (YES in Act 18), as Act 19, the CPU 11a displays a guide image SC3 (refer to FIG. 11) on a portion of the screen of the touch panel 11f.

The guide image SC3 is provided for the clerk 21 to confirm the settlement device 12 which is the transmission destination of the accounting data. FIG. 11 illustrates an example of the guide image SC3. The guide image SC3 includes a display area R4 and a button B5. The display area R4 displays a message together with the total number and the total amount of a total sum table 32a. The message causes the clerk 21 to recognize the settlement device 12 which is the transmission destination of the accounting data, for example, such as "please perform the settlement by using the settlement device B". The content of the message is not particularly limited. For example, the message may be "the accounting data is transmitted to the settlement device B". Alternatively, the message may be simply "settlement device B" or "B". The button B5 is provided for the clerk 21 to designate that the guide image SC3 is closed. If the button B5 is touched, the CPU 11a closes the guide image SC3, and completes the information processing for one transaction.

The guide image SC3 may be displayed on the touch panel 11f for the customer instead of the touch panel 11f for the clerk. In this case, the customer who confirms the guide image SC3 touches the button B5.

The clerk 21 who confirms the guide image SC3 touches the button B5, and notifies the shopper 22 that the settlement has to be performed using the settlement device 12 guided by the guide image SC3. After receiving this notification, the shopper 22 moves to the settlement device 12, and performs the settlement operation.

Next, an operation of the settlement device 12 will be described.

If the settlement device 12 is activated, the CPU 12a starts the main processing in the procedure illustrated by the flowchart in FIG. 7. First, as Act 31, the CPU 12a resets an in-process flag F of a flag memory 52 to "0". As Act 32, the CPU 12a displays a standby image on a portion of the screen of the touch panel 12f. The standby image shows that the settlement device 12 is not in a state where the settlement processing is performed, and may optionally show any information. For example, it is supposed that the standby image shows a message indicating that the settlement processing cannot be performed, or shows any optional image displaying an advertisement as a screen saver.

The CPU 12a can perform reception interruption processing illustrated in FIG. 8 in parallel with the main processing illustrated in FIG. 7. The reception interruption processing starts if the communication unit 12h receives the information in which the communication address set in the host device is set as the transmission destination address.

If the reception interruption processing starts, first, as Act 51, the CPU 12a identifies whether or not the received information includes the accounting data. The received information includes a type code indicating the type of information. The CPU 12a identifies whether or not the received information includes the accounting data by using the type code. When the received information does not include the accounting data (NO in Act 51), the CPU 12a performs the information processing in accordance with the type of the received information.

When the received information includes the accounting data (YES in Act 51), the CPU 12a checks the in-process flag F as Act 52. Here, when the in-process flag F is reset to "0" (NO in Act 52), that is, when the settlement processing is not performed in the settlement device 12, as Act 53, the CPU 12a notifies the main processing that the accounting data is received.

Here, a computer mainly configured to include the CPU 12a performs the processes in Act 51 to Act 53 in cooperation with the communication unit 12h, thereby configuring a reception unit that receives the accounting data transmitted via the network (LAN 13).

When the in-process flag F is set to "1" (YES in Act 52), that is, when the settlement processing is performed in the settlement device 12, as Act 54, the CPU 12a confirms whether or not the transmission destination ID is stored in the transmission destination memory 53. When the transmission destination ID is not stored in the transmission destination memory 53 (NO in Act 54), as Act 55, the CPU 12a transmits the error response signal to the registration device 11 of the accounting data transmission source.

Specifically, the CPU 12a sets the communication address set as the transmission source address in the received information as the transmission destination address, and sets the communication address set in the host device as the transmission source address, thereby controlling the communication unit 12h so as to transmit the error response signal to the LAN 13. Through this control, the error response signal is transmitted onto the LAN 13. The error response signal is received by the registration device 11 identified by the transmission destination address.

When the transmission destination ID is stored in the transmission destination memory 53 (YES in Act 54), as Act 56, the CPU 12a acquires the transmission destination ID from the transmission destination memory 53. Act 57, the CPU 12a transmits the information received in the process in Act 51, that is, the information including the accounting data having the assigned customer segment code, to another settlement device 12 identified by the transmission destination ID.

Specifically, the CPU 12a changes the transmission destination address of the information received in the process in Act 51 to the communication address set in one settlement device 12 identified by the transmission destination ID, thereby controlling the communication unit 12h so as to transmit the communication address to the LAN 13. Through this control, the information including the accounting data having the assigned customer segment code is transmitted onto the LAN 13. The information is received by one settlement device 12 identified by the transmission destination ID. The CPU 12a of the settlement device 12 which receives the information performs the reception interruption processing illustrated by the flowchart in FIG. 8.

Referring back to FIG. 7, description will be continued.

As Act 33, the CPU 12a which displays the standby image on a portion of the screen of the touch panel 12f waits until the accounting data is received. If the CPU 12a receives the notification that the accounting data is received through the reception interruption processing in Act 53, as Act 34, the CPU 12a stores the accounting data having the assigned customer segment code in the accounting data memory 51. As Act 35, the CPU 12a sets the in-process flag F to "1". As Act 36, the CPU 12a transmits the reception response signal to the registration device 11 of the accounting data transmission source.

Specifically, the CPU 12a sets the communication address set as the transmission source address in the received information as the transmission destination address, and sets the communication address set in the host device as the transmission source address, thereby controlling the communication unit 12h so as to transmit the reception response signal to the LAN 13. Through this control, the reception response signal is transmitted onto the LAN 13. The reception response signal is received by the registration device 11 identified by the transmission destination address.

In this way, as Act 37, the CPU 12a which controls the transmission of the reception response signal detects the customer segment code added to the accounting data. As Act 38, from the server 14, the CPU 12a acquires image information for each customer segment stored in the customer-segmented image information file 32 associated with the customer segment code.

Specifically, the CPU 12a generates an image information request command including the customer segment code. The CPU 12a sets the communication address of the server 14 as the transmission destination address, and sets the communication address set in the host device as the transmission source address, thereby controlling the communication unit 12h so as to transmit the image information request command to the LAN 13. Through this control, the image information request command is transmitted onto the LAN 13. The image information request command is received by the server 14 identified by the transmission destination address.

After receiving the image information request command, the server 14 detects the image information stored in the customer-segmented image information file 32 in association with the customer segment code included in the command. The server 14 sets the communication address in which the image information is set in the command as the transmission source address, and sets the communication address set in the host device as the transmission source address, thereby controlling the transmission of the image information. Through this control, the image information detected from the customer-segmented image information file 32 is transmitted onto the LAN 13. The image information is received by the settlement device 12 identified by the transmission destination address.

Here, a computer mainly configured to include the CPU 12a performs the process in Act 37, thereby configuring a detection unit that detects the information (customer segment code) relating to the attribute of the settler which is added to the accounting data received by the reception unit.

In this way, if the image information for each customer segment is acquired, the CPU 12a stores the image information in the image information memory 54. As Act 39, the CPU 12a changes a settlement image SC4 (refer to FIG. 12), based on the image information in the image information memory 54. As Act 40, the CPU 12a displays the settlement image SC4 on a portion of the screen of the touch panel 12f.

The settlement image SC4 is provided in order to prompt the shopper 22 who performs the settlement to select a settlement method. FIG. 12 illustrates an example of the settlement image SC4. The settlement image SC4 includes display areas R5, R6, and R7, and buttons B6, B7, and B8. The display area R5 displays an operation guidance to the shopper 22. The display area R6 displays the total number and the total amount which are included in the accounting data. The display area R7 displays the image information for each customer segment acquired from the server 14. The button B6 is provided for the shopper 22 to designate that the settlement method is cash. The button B7 is provided for the shopper 22 to designate that the settlement method is the credit card. The button B8 is provided for the shopper 22 to designate that the settlement method is the electronic money. In the following description, the button B6 is referred to as a cash button B6, the button B7 is referred to as a credit button B7, and the button B8 is referred to as an electronic money button B8.

In the example illustrated in FIG. 12, the image of the display area R7 is set as an advertisement image of a recommended commodity set separately for each customer segment. The image of the display area R7 is not limited to the advertisement image of the recommended commodity. Any image may be displayed as long as the image attracts the interest of the shopper 22 belonging to the same customer segment. For example, an image notifying information on a restaurant, a clothing store, or a grocery shop near the store may be displayed after being selected from the customer segment.

Here, a computer mainly configured to include the CPU 12a performs the process in Act 39, thereby configuring a changing unit that changes the settlement image SC4 to an image suitable for the attribute of the settler, based on the information (customer segment code) relating to the attribute of the settler (shopper 22) which is detected by the detection unit. The computer performs the process in Act 40, thereby configuring a control unit that causes the display device of the touch panel 12f to display the settlement image SC4 changed by the changing unit.

The shopper 22 who confirms the settlement image SC4 determines whether to pay in cash, whether to pay with the credit card, or whether to pay with the electronic money. When the payment is made in cash, the shopper 22 touches the cash button B6, and puts the cash into the automatic change machine 12m as much as or more than the total amount. When the payment is made with the credit card, the shopper 22 touches the credit button B7, and causes the card reader & writer 12i to read the credit card data. When the payment is made with the electronic money, the shopper 22 touches the electronic money button B8, and causes the electronic money reader & writer 12k to read the electronic money data stored in the IC chip of the IC card or the information communication terminal.

After displaying the settlement image SC4, as Act 41, the CPU 12a waits until the cash button B6, the credit button B7, or the electronic money button B8 is touched. If any of the buttons is touched, as Act 42, the CPU 12a performs the settlement processing in accordance with the settlement method selected by the touched the button. That is, when the cash button B6 is touched, the CPU 12a performs the settlement processing for the cash payment. When the credit button B7 is touched, the CPU 12a performs the settlement processing for the credit card payment. When the electronic money button B8 is touched, the CPU 12a performs the settlement processing for the electronic money payment. The settlement processing is the well-known procedure in the existing self-checkout POS terminal. Accordingly, the description will be omitted herein.

The settlement method is not limited to the cash, the credit card, and the electronic money. For example, the settlement device 12 can deal with settlement using cash vouchers such as service points and gift certificates.

If the settlement processing is completed, as Act 43, the CPU 12a performs receipt issuing. That is, the CPU 12a edits print data of a receipt, based on the accounting data stored in the accounting data memory 51. The CPU 12a operates the printer 12g to issue the receipt. After the receipt is issued, as Act 44, the CPU 12a notifies the server 14 of settlement completion.

Specifically, the CPU 12a generates a settlement completion command including the accounting data having the assigned customer segment code stored in the accounting data memory 51. The CPU 12a sets the communication address of the server 14 as the transmission destination address, and sets the communication address set in the host device as the transmission source address, thereby controlling the communication unit 12h so as to transmit the settlement completion command to the LAN 13. Through this control, the settlement completion command is transmitted onto the LAN 13. The settlement completion command is received by the server 14 identified by the transmission destination address.

After receiving the settlement completion command, the server 14 updates the data of the customer-segmented aggregation file 31, based on the accounting data and the customer segment code which are included in the command.

After notifying the server 14 of the settlement completion, the CPU 12a returns to the process of Act 31. The CPU 12a repeats the subsequent processes in the same manner as described above.

In this way, in a store introducing the checkout system 10, the clerk 21 operates the registration device 11, and performs the sales registration of the commodity purchased by the shopper 22. In this case, the clerk 21 estimates the gender and the age of the shopper 22. After completes the sales registration, the clerk 21 touches the customer segment button B4 having the assigned customer segment code of the customer segment corresponding to the estimated gender and age.

In this case, in the registration device 11, the customer segment code is added to the accounting data including the sales data of the commodity purchased by the shopper 22. The accounting data having the assigned customer segment code is transmitted to the settlement device 12 identified by the transmission destination ID. In this way, the customer segment button B4 also serves as a transmission key provided for the clerk 21 to designate the transmission of the accounting data. Therefore, compared to the existing semi-self-checkout system, the operation of the clerk 21 is not complicated.

Here, when the settlement processing is can be performed using the settlement device 12 identified by the transmission destination ID, the accounting data having the assigned customer segment code is received by the settlement device 12. The reception response signal is transmitted from the settlement device 12. The reception response signal is received by the registration device 11 of the accounting data transmission source. In the registration device 11, the guide image SC3 is displayed. The clerk 21 notifies the shopper 22 that the settlement is performed in the settlement device 12 displayed in the guide image SC3. After receiving the notification, the shopper 22 moves to a place where the settlement device 12 is installed.

In the settlement device 12 which receives the accounting data, the customer segment code added to the accounting data is detected. Based on the image information stored in the customer-segmented image information file 32 in association with the customer segment code, the settlement image SC4 is changed and displayed on the touch panel 12f. As a result, the settlement image SC4 includes an image which attracts the interest of the person in the gender and the age which are the same as those of the shopper 22.

Therefore, the shopper 22 who moves to a place notified by the clerk 21, the shopper 22 watches the image attracting the interest of the person in the gender and the age which are the same as those of the shopper 22 from the settlement image SC4 displayed on the touch panel 12f of the settlement device 12 installed at that place. In other words, the image included in the settlement image SC4 attracts the interest of the person in the gender and the age which are the same as those of the shopper 22. Accordingly, there is a high possibility that the image attracts the interest of the shopper 22. That is, the shopper 22 can watch the interesting image. Therefore, the shopper 22 is motivated to select the semi-self-checkout system.

The shopper 22 who confirms the settlement image SC4 selects a settlement method from the settlement image SC4, and performs a payment operation using the settlement method. If the payment operation is performed, the settlement device 12 performs the settlement processing using the settlement method, based on the accounting data. The accounting data for which the settlement processing is performed is transmitted to the server 14 together with the customer segment code. In the server 14, the accounting data for which the settlement processing is performed in each settlement device 12 is calculated for each customer segment, and is stored in the customer-segmented aggregation file 31.

The embodiments described herein are not limited to the above-described configurations. Hereinafter, modification examples of the embodiment will be described.

For example, in the above-described embodiment, the information relating to the attribute of the settler is defined as the customer segment code for identifying the customer segment estimated from the gender and the age of the settler. The information relating to the attribute of the settler is not limited to the customer segment code. For example, when the card reader & writer 11i disposed in the registration device 11 reads a membership card called a point card or a member's card, a priority rank of the settler is acquired from the information of the membership card. The priority rank may be information relating to the attribute of the settler. In this case, the settlement device 12 changes the settlement image, based on the priority rank. For example, the settlement device 12 changes the settlement image so as to provide a high-grade feeling for the settler whose priority rank is high. Alternatively, the customer segment button B4 included in the payment image SC2 is classified into a shopper with children, a couple, a housewife, and a single. For example, in a case of the shopper with children, the image is changed to the settlement image SC4 in which an animation or animal character appears. In this manner, it is understood that an operation rate of the semi-self-checkout system is further increased.

In the above-described embodiment, in the settlement image SC4, an area for displaying the image information of each customer segment is identified as the display area R7, but the area may not be identified. For example, when the image is changed to the settlement image so as to provide the high-grade feeling as described above, the high-grade feeling may be provided by changing a shape or a color of the cash button B6, the credit button B7, and the electronic money button B8. Similarly, with regard to the settlement image SC4 for the above-described shopper with children, a character may talk with the shopper about an operation guidance displayed on the display area R5. In this case, the character may notify the shopper of the operation guidance by using voice together with the settlement image SC4.

A color of the image may be changed, a background color may be changed, or a size of letters may be changed in conjunction with the customer segment.

In the above-described embodiment, the settlement device 12 which completes the settlement processing transmits the accounting data having the assigned customer segment code to the server 14. In this regard, the server 14 may receive the accounting data having the assigned customer segment code transmitted by the registration device 11 to the settlement device 12, and the accounting data may be calculated for each customer segment. In this case, for example, the settlement device 12 transmits the settlement completion command to the server 14 together with the information identifying the accounting data. The server 14 detects the accounting data identified by the information included in the settlement completion command from the accounting data received from the registration device 11, and the accounting data is calculated for each customer segment. In this manner, the accounting data for which the settlement processing is completed can be calculated for each customer segment.

In the above-described embodiment, the registration device 11 transmits the accounting data to the settlement device 12 identified by the transmission destination ID set in the registration device 11. In this case, the settlement device 12 performs the settlement processing if the settlement processing can be performed. However, when the settlement processing cannot be performed, the registration device 11 transmits the accounting data to the other settlement device 12 identified by the transmission destination ID set in the settlement device 12. If the other settlement device 12 can perform the settlement processing, the settlement processing is performed. The transmission method of the accounting data is not limited thereto. For example, the clerk operating the registration device 11 may select a vacant settlement device 12, and may transmit the accounting data to the vacant settlement device 12. Alternatively, the registration device 11 transmits the accounting data to the server 14, the information identifying the accounting data is displayed for the shopper 22, and the shopper 22 is notified of the information by using output means such as printing. After receiving the notification, the shopper 22 inputs the information identifying the accounting data from the vacant settlement device 12. After receiving the input of the information identifying the accounting data, the settlement device 12 refers to the server 14, fetches the corresponding accounting data, and performs the settlement processing. Any method may be employed.

The registration device 11 or the settlement device 12 is generally transferred in a state where a program such as a control program is stored in a ROM. However, the embodiments described herein are not limited thereto. The registration device 11 or the settlement device 12 may be transferred in a state where the program is not stored in the ROM or in a state where another control program is stored in the ROM or an auxiliary memory unit. In this case, a control program individually transferred from the registration device 11 or the settlement device 12 may be written on a writable storage device included in the registration device 11 or the settlement device 12 in accordance with a user's operation. Alternatively, another control program other than the above-described control program may be rewritten. The control program can be transferred by being recorded in a removable recording medium, or by means of communication via a network. The recording medium may employ any form such as a CD-ROM and a memory card as long as the recording medium can store the program and can be read by the registration device 11 or the settlement device 12. With regard to a function obtained by installing or downloading the program, the function may be realized in cooperation with an operating system (OS) installed inside the device.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the scope of the inventions. The accompanying claims and their equivalents are intended to cover such forms or modifications as would fall within the scope of the inventions.

## Claims

1. A checkout system comprising:
a registration device that generates accounting data required for transaction settlement;
a settlement device that performs settlement processing, based on the accounting data generated by the registration device; and
a network that connects the registration device and the settlement device to each other,
wherein the registration device comprises
an input unit configured to receive an input of information relating to an attribute of a settler, and
a transmission unit configured to transmit information to the network by adding the information received by the input unit and relating to the attribute of the settler to the accounting data, and
wherein the settlement device comprises
a display device,
a reception unit configured to receive the accounting data transmitted via the network,
a detection unit configured to detect the information relating to the attribute of the settler which is added to the accounting data received by the reception unit,
a selecting unit configured to select a settlement image having information relating to settlement processing to an image suitable for the attribute of the settler, based on the information relating to the attribute of the settler which is detected by the detection unit, and
a control unit configured to display on the display device the settlement image selected by the selecting unit.

2. The system according to claim 1,
wherein under a condition that the input unit receives the input of the information relating to the attribute of the settler, the transmission unit transmits the accounting data, to which the information relating to the attribute of the settler is added, to the network.

3. The system according to claim 1 or 2,
wherein the image suitable for the attribute of the settler is a specific image corresponding to an age and gender of the settler.

4. The system according to any one of claims 1 to 3 comprising a plurality of registration devices and a plurality of settlement devices.

5. A registration device connected via a network to a settlement device which performs settlement processing based on accounting data, the registration device comprising:
an input unit configured to receive an input of information relating to an attribute of a settler; and
a transmission unit configured to transmit information to the network by adding the information received by the input unit and relating to the attribute of the settler to the accounting data.

6. The registration device according to claim 5,
wherein when the input unit receives the input of the information relating to the attribute of the settler, the transmission unit transmits the accounting data, to which the information relating to the attribute of the settler is added, to the network.

7. The registration device according to claim 5 or 6,
wherein the attribute of the settler is at least one of gender, age, marital status, and a priority rank.

8. The registration device according to any one of claims 5 to 7,
wherein the attribute of the settler is whether children are present.

9. A settlement device connected via a network to a registration device which generates accounting data required for transaction settlement, the settlement device comprising:
a display device;
a reception unit configured to receive the accounting data transmitted via the network;
a detection unit configured to detect information relating to an attribute of a settler which is added to the accounting data received by the reception unit;
a selecting unit configured to select a settlement image having information relating to settlement processing to an image suitable for the attribute of the settler, based on the information relating to the attribute of the settler which is detected by the detection unit; and
a control unit configured to display on the display device the settlement image selected by the selecting unit.

10. The settlement device according to claim 9,
wherein the accounting data comprises at least one of a commodity code, a commodity name, a unit price, a number of sales, a sales amount, a total number, or a total amount of the commodities whose sales are registered.

11. The settlement device according to claim 9 or 10,
wherein the attribute of the settler is at least one of gender, age, marital status, and a priority rank.

12. The settlement device according to any one of claims 9 to 11,
wherein the attribute of the settler is whether children are present.

13. The settlement device according to any one of claims 9 to 12,
wherein the image suitable for the attribute of the settler is a specific image corresponding to an age and gender of the settler.

14. A control method for controlling a settlement device connected via a network to a registration device which generates accounting data required for transaction settlement, based on input data, and comprising a display device, the method comprising:
receiving the accounting data transmitted via the network;
detecting information relating to an attribute of a settler which is to be added to the accounting data received via the network;
selecting a settlement image having information relating to settlement processing to an image suitable for the attribute of the settler, based on the information relating to the attribute of the settler which is detected in the detecting; and
causing the display device to display the settlement image selected in the selecting.

15. The method according to claim 14, further comprising:
transmitting the accounting data, to which the information relating to the attribute of the settler is added, to the network when receiving accounting data comprising the attribute of the settler.
